(19) Europäisches Patentamt
European Patent Office
Office européen des brevets

(11) Veröffentlichungsnummer : **0 147 685**
**B1**

(12) # EUROPÄISCHE PATENTSCHRIFT

(45) Veröffentlichungstag der Patentschrift : **26.04.89**

(51) Int. Cl.⁴ : **C 08 B 37/16**

(21) Anmeldenummer : **84114766.3**

(22) Anmeldetag : **04.12.84**

(54) **Ether des beta-Cyclodextrins und ein Verfahren zu ihrer Herstellung.**

(30) Priorität : **17.12.83 DE 3345779**

(43) Veröffentlichungstag der Anmeldung : **10.07.85 Patentblatt 85/28**

(45) Bekanntmachung des Hinweises auf die Patenterteilung : **26.04.89 Patentblatt 89/17**

(84) Benannte Vertragsstaaten : **DE FR GB**

(56) Entgegenhaltungen :
**US–A– 3 426 011**
**LIFE SCIENCES, Band 29, Nr. 3, Seiten 307-311, Pergamon Press, US; J. PITHA: "Enhanced water solubility of vitamines A,D,E, and K by substituted cycloamyloses"**

(73) Patentinhaber : **HOECHST AKTIENGESELLSCHAFT**
**Postfach 80 03 20**
**D-6230 Frankfurt am Main 80 (DE)**

(72) Erfinder : **Brandt, Lothar, Dr. Dipl.-Chem.**
**Alfred-Schumann-Strasse 23**
**D-6200 Wiesbaden (DE)**
Erfinder : **Felcht, Utz-Hellmuth, Dr. Dipl.-Chem.**
**Hubertusstrasse 2**
**D-6232 Bad Soden-Neuenhain (DE)**

**EP 0 147 685 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft bestimmte Ether des β-Cyclodextrins als neue Verbindungsklasse und ein Verfahren zu ihrer Herstellung.

β-Cyclodextrin (β-CD) ist ein aus 7 Glucoseeinheiten bestehendes cyclisches Oligosaccharid, dessen Einheiten α-1,4 verknüpft sind :

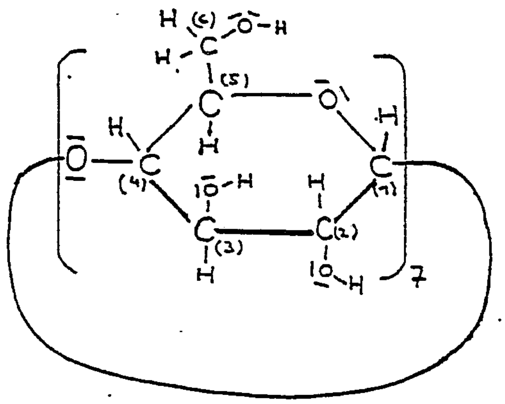

β-Cyclodextrin

Es wird durch enzymatischen Abbau der Stärke gewonnen und entsteht dabei in der Hauptsache neben α-Cyclodextrin (aus 6 Glucoseeinheiten) und γ-Cyclodextrin (aus 8 Glucoseeinheiten). Zum chemischen und physikalisch chemischen Verhalten dieser Verbindungsklasse wird auf die Aufsätze « Cyclodextrin-Einschlußverbindungen in Forschung und Industrie » von W. Saenger in Angew. Chem. 92, S. 343 bis 361 (1980), Verlag Chemie-Weinheim (DE) und « Synthesis of Chemically Modified Cyclodextrins » (Herstellung chemisch modifizierter Cyclodextrine) von A. P. Croft und R. A. Bartsch in Tetrahedron Vol. 39, Nr. 9, S. 1417 bis 1474 (1983), Pergamon Press (GB) verwiesen. Der Veretherungsreaktion stehen im β-Cyclodextrin pro Anhydro-D-glucose-Einheit maximal 3 OH-Gruppen zur Verfügung, d. h. pro β-Cyclodextrin-Molekül maximal 21 OH-Gruppen. Da die bisher bekannten Ether des β-Cyclodextrins insbesondere als Modellsubstanzen eingesetzt wurden, sind im wesentlichen solche Ether bekannt, in denen gezielt pro Anhydro-D-glucose-Einheit eine, zwei oder alle drei OH-Gruppen an den C-Atomen 2, 3 und 6 substituiert sind ; der Substitutionsgrad (DS) dieser Verbindungen beträgt dann 1, 2 oder 3. Es sind prinzipiell aber auch alle Zwischenstufen denkbar, denn die Substitution auch nur einer OH-Gruppe im β-Cyclodextrin-Molekül führt bereits zu einer Ethergruppe (DS von etwa 0,14). Da es statistisch bei so niedrigen Veretherungsgraden auch vorkommt, daß einige Moleküle unverethert bleiben, bei anderen aber bereits 2 oder mehr OH-Gruppen substituiert werden, ist es für die Praxis wohl vernünftig davon auszugehen, daß bei einem DS ab etwa 0,3 auch tatsächlich mindestens einfach veretherte Moleküle vorliegen.

Aus dem Stand der Technik sind bereits die folgenden Ether des β-Cyclodextrins bekannt :

In dem bereits vorstehend erwähnten ersten der beiden Aufsätze (S. 354) werden konkret Methyl-, Natriumcarboxymethyl- und Dihydroxypropylether des β-Cyclodextrins genannt, auf die Herstellverfahren wird nicht eingegangen.

In dem zweiten der vorstehend erwähnten Aufsätze (insbesondere ab S. 1427) werden konkret neben verschiedenen Methylethern des β-Cyclodextrins auch an den C-Atomen 2 und 6 Benzyl-, Allyl- oder Vinylgruppen und an den C-Atomen 3 Methylgruppen aufweisende Ether genannt und in ihrer Herstellung beschrieben, außerdem auch Carboxymethyl- und Carboxyethylether, Cyanoethyl- und Sulfoethylether. Die letztgenannten Verbindungen beschreiben ebenfalls die US-A 3 453 258 und die US-A 3 426 011, wobei in der letzteren auch eine Verfahrensvariante zur Herstellung von Carboxymethylethern des β-Cyclodextrins aufgeführt wird, in der die Veretherung in Gegenwart eines organischen Lösemittels (Isopropanol) und einer wäßrigen NaOH-Lösung stattfindet.

Aus der US-PS 3 459 731 sind sowohl Hydroxyethyl- und Hydroxypropylether des β-CD bekannt als auch ein Hydroxyethyl-hydroxypropyl-Mischether.

B. Casu et al. « Conformation of O-methylated Amylose and Cyclodextrins » (Struktur O-methylierter Amylose und Cyclodextrine) in Tetrahedron, Vol. 24, S. 803 bis 821 (1968), Pergamon Press, beschreiben a) an den C-Atomen 2 und 6 disubstituiertes Methyl-β-CD (DS etwa 2), das durch Reaktion von β-CD mit Dimethylsulfat in einem DMF/DMSO-Gemisch in Anwesenheit von BaO erzeugt wird, und b) trisubstituiertes Methyl-β-CD (DS etwa 3), hergestellt aus β-CD mit Methyljodid in DMSO in Anwesenheit von BaO.

R. Bergeron et al. « Complex Formation between Mycobacterial Polysaccharides or Cyclodextrins and Palmitoyl Coenzyme A » (Komplexbildung aus mykobakteriellen Polysacchariden oder Cyclodextrinen und Palmitoyl-Coenzym A) in The Journal of Biological Chemistry, Vol. 250, Nr. 4, S. 1223 bis 1230

(1975), beschreiben a) an den C-Atomen 2 und 6 disubstituiertes Methyl-β-CD und Propyl-β-CD, die durch Reaktion von β-CD mit Dimethyl- bzw. Dipropylsulfat in einem DMF/DMSO-Gemisch in Anwesenheit von BaO und $Ba(OH)_2$ erzeugt werden, b) am C-Atom 3 oder 6 monosubstituiertes Methyl-β-CD (DS etwa 1 bzw. etwa 0,7), die aus mit Schutzgruppen versehenem β-CD durch Reaktion mit Methyljodid bzw. Diazomethan hergestellt werden, und c) trisubstituiertes Methyl-β-CD, das aus disubstituiertem durch Umsetzung mit Methyljodid in einem DMF/DMSO-Gemisch in Anwesenheit von Natriumhydrid hergestellt wird.

N. Wiedenhof et al. « Properties of Cyclodextrins/Part III/Cyclodextrin-Epichlorhydrin Resins : Preparation and Analysis » (Eigenschaften von Cyclodextrinen/Teil III/Cyclodextrin-Epichlorhydrin-Harze : Herstellung und Zusammensetzung) in Die Stärke, 21. Jg., Nr. 5, S. 119 bis 123 (1969), beschreiben die Herstellung von β-CD-Epichlorhydrin-Polymerperlen und wasserlöslichen-Harzen durch Reaktion von β-CD mit dem bifunktionell reaktionsfähigen Epichlorhydrin in Methylisobutylketon in Anwesenheit einer wäßrigen 30 %igen oder 16 %igen NaOH-Lösung und $NaBH_4$.

J. Lammers et al. « Properties of Cyclodextrins/Part VI/Water-Soluble Cyclodextrin-Derivatives, Preparation and Analysis » (Eigenschaften von Cyclodextrinen/Teil VI/Wasserlösliche Cyclodextrinderivate, Herstellung und Zusammensetzung) in Die Stärke, 23. Jg., Nr. 5, S. 167 bis 171 (1971), beschreiben die Herstellung von a) Natriumcarboxymethyl-β-CD (DS von etwa 0,45) durch Reaktion von β-CD mit Monochloressigsäure in 30 %iger wäßriger NaOH-Lösung in Anwesenheit von $NaBH_4$, und b) von Natriumsulfopropyl-β-CD (DS von etwa 0,9) durch Reaktion von β-CD mit Propansulton in 40 %iger wäßriger NaOH-Lösung.

K. Takeo et al. « Synthesis of Heptakis (2-O-methyl-β-cyclodextrin » (Herstellung des am C-Atom 2 substituierten Methyl-β-Cyclodextrins) in Die Stärke, 28. Jg., Nr. 7, S. 226/227 (1976), beschreiben die Herstellung des nur am C-Atom 2 substituierten Methyl-β-CD (DS von etwa 1) durch Methylierung des am C-Atom 6 bromierten β-CD mit Dimethylsulfat in DMF in Anwesenheit von BaO und $Ba(OH)_2 \cdot 8H_2O$ und Abspaltung des Bromsubstituenten.

J. Szejtli et al. « Synthesis and $^{13}C$-NMR Spectroscopy of Methylated β-Cyclodextrins » (Herstellung und $^{13}C$-NMR Spektroskopie von methyliertem β-CD) in Starch/Stärke, 32. Jg., Nr. 5, S. 165 bis 169 (1980), beschreiben die Herstellung a) des trisubstituierten Methyl-β-CD durch Reaktion des β-CD mit Methyljodid in trockenem DMSO oder DMF in Anwesenheit von Natriumhydrid, und b) des an den C-Atomen 2 und 6 disubstituierten methyl-β-CD durch Reaktion des β-CD mit Dimethylsulfat in einem DMSO/DMF-Gemisch in Anwesenheit von BaO und $Ba(OH)_2 \cdot 8H_2O$.

In der JP-A 6883/79 werden Flüssigkristallelemente beschrieben, die beispielsweise Derivate von β-CD als cyclischem Oligosaccharid enthalten, wobei nach der dort angegebenen allgemeinen Formel u. a. die verschiedensten Hydroxyalkyl- oder Aminoalkylether möglich sein sollten. In der Beschreibung und den Beispielen wird als einziges konkretes Derivat von β-CD nur das Hydroxypropyl-β-CD genannt. Einen ähnlichen Gegenstand beschreibt die DE-A 2 704 776, wobei auch dort konkret nur Hydroxypropyl-β-CD aufgeführt wird.

Aus der WO-A 83/00809 ist der Einsatz von quellfähigen β-Cyclodextrinderivaten in Tabletten bekannt, wobei die Derivate aus β-CD durch Umsetzung mit bifunktionell reaktionsfähigen Verbindungen wie Epichlorhydrin in wäßrig-alkalischem Medium hergestellt werden. Die Herstellung solcher Derivate ist auch aus der DE-B 1 493 047 bekannt oder unter Hinzufügung von Cellulose während der Reaktion auch aus der DE-A 3 130 502.

Die wasserlöslichen Einschluß-Komplexe gemäß der DE-A 3 118 218 werden aus Methyl-β-CD und biologisch-aktiven organischen Verbindungen (z. B. Vitaminen oder Steroidhormonen) gebildet und sollen ein « partiell methyliertes β-Cyclodextrin » enthalten, d. h. ein Molekül, in dem mindestens 1 und maximal 20 Hydroxylgruppen verethert sind (DS von etwa 0,14 bis 2,86). Die Methyl-β-CD-Typen sollen entweder aus homogenen Molekülen bestehen oder können auch Mischungen von Molekülen mit unterschiedlichem Substitutionsgrad sein, bevorzugt wird ein im Mittel disubstituiertes Methyl-β-CD mit einem DS von etwa 2. Zur Herstellung der Derivate wird auf die weiter oben zitierten Aufsätze verwiesen.

In jüngster Zeit ist insbesondere das β-Cyclodextrin stärker in den Vordergrund getreten, da es inzwischen offensichtlich großtechnische Verfahren gibt, die eine kostengünstige Produktion ermöglichen. Aufgabe der vorliegenden Erfindung ist es, zwei bisher noch unbekannte Ether zu synthetisieren und ein kostengünstiges Verfahren zu deren Herstellung zu entwickeln.

Die Erfindung geht aus von den bekannten wasserlöslichen Ethern des β-Cyclodextrins, die erfindungsgemäß dadurch gekennzeichnet sind, daß sie als Ethersubstituenten die Ethyl- oder die N,N-Dialkyl ($C_1$ bis $C_4$) aminoethylgruppe aufweisen. Eine weitere Lösung ist ein Verfahrens zur Herstellung dieser Ether. Das erfindungsgemäße Verfahren ist dadurch gekennzeichnet, daß β-Cyclodextrin mit einem Veretherungsmittel in einem basischen flüssigen Reaktionsmedium umgesetzt wird, wobei das Reaktionsmedium ein Alkalimetallhydroxid, Wasser und mindestens ein mit Wasser mischbares organisches Lösemittel enthält. Unter dem Begriff « wasserlöslich » ist zu verstehen, daß das Verfahrensprodukt bei Raumtemperatur (d. h. etwa 20 °C) zu mindestens 10 Gew.-%, insbesondere zu mindestens 15 Gew.-%, wasserlöslich ist, d. h. die gesättigte Lösung enthält mindestens den angegebenen Prozentsatz. Zu den bevorzugten organischen Lösemitteln zählen Dialk($C_1$ bis $C_3$)oxyethane [Dialkyl($C_1$ bis $C_3$)glykole], Alkanole von $C_2$ bis $C_5$, Alkoxy($C_1$ bis $C_4$)alkan($C_2$ oder $C_3$)ole und aliphatische Ketone, insbesondere Dimethoxyethan, Isopropanol, tert. Butanol, Aceton und/oder Methylethylketon. Diese organischen Lösemittel sind einzeln oder im Gemisch neben Wasser im Veretherungsgemisch vorhanden.

Das erfindungsgemäße Verfahren kann in einem der bekannten Aggregate (z. B. Kneter oder Rührkessel) durchgeführt werden. Wenn die Temperatur des Reaktionsgemisches so hoch gewählt wird, daß sie über der Siedetemperatur des Gemisches aus organischen Lösemitteln/$H_2O$ liegt, empfiehlt sich die Durchführung des erfindungsgemäßen Verfahrens in einer Druckapparatur ; auch bei Einsatz von unter Normalbedingungen (Normaldruck, Raumtemperatur) bereits gasförmigen Reaktionskomponenten wird üblicherweise in einer Druckapparatur gearbeitet.

Das Alkalimetallhydroxid ist üblicherweise NaOH (aber auch KOH oder LiOH) in fester oder gelöster Form als wäßrige Alkalimetallhydroxid-Lösung, beispielsweise in 10 bis 50 gew.-%iger Form. Bevorzugt werden im erfindungsgemäßen Verfahren 1 bis 30 Gew.-Teile an organischen Lösemitteln pro Gew.-Teil β-CD eingesetzt, der Anteil des Alkalimetallhydroxids beträgt im allgemeinen 2,5 bis 35 Mol, insbesondere 5 bis 30 Mol, pro Mol β-CD. Der Wasseranteil im Reaktionsgemisch wird zweckmäßig so gewählt, daß er — bezogen auf das Gewicht des Flüssigkeitsgemisches organische Lösemittel/Wasser — bei 3 bis 50 % liegt. Als Veretherungsmittel werden bevorzugt Ethylchlorid, Diethylsulfat oder 1-N,N-Dialkyl($C_1$ bis $C_4$)amino-2-chlorethan zur Reaktion gebracht. Der Anteil des unter den vorgegebenen Bedingungen in allen Fällen nur monofunktionell reaktionsfähigen Veretherungsmittels beträgt üblicherweise 2 bis 50 Mol, insbesondere 5 bis 40 Mol, pro Mol β-CD.

Die bei der Veretherungsreaktion entstehenden Ether, wobei im Rahmen der vorliegenden Erfindung nur die eine einzige Art von Substituenten aufweisenden Ether zu verstehen sind, sind neu, dazu zählen insbesondere die Ethyl-, N,N-Dimethylaminoethyl- und N,N-Diethylaminoethylether ; diese Verbindungen können Substitutionsgrade (DS) von etwa 0,3 bis 0,8 haben und aus Gemischen von Molekülen mit unterschiedlichem Substitutionsgrad bestehen, so daß bei letzteren der Substitutionsgrad einen statistischen Mittelwert angibt.

Bei der praktischen Durchführung des erfindungsgemäßen Verfahrens wird zweckmaßig zuerst das β-CD in das Gemisch aus organischen Lösemitteln, Wasser und Alkalimetallhydroxid eingemischt, wonach die Zugabe des Veretherungsmittels in einer oder mehreren Stufe(n) erfolgt. Die jeweiligen Reaktionsgemische und -gefäße können auch mit Inertgasen wie Stickstoff gespült werden, um oxidative Nebenreaktionen zu verhindern. Die Veretherungsreaktion verläuft besonders erfolgreich bei einer Temperatur zwischen 30 und 130 °C, je nach Reaktivität des verwendeten Veretherungsmittels. Die erforderlichen Zeiten in der Veretherungsreaktion liegen — je nach Reaktionstemperatur — im allgemeinen zwischen 20 min und 8 h. In einem ersten Trennvorgang (z. B. einer Filtration, Destillation oder Extraktion), nach Zugabe von fällenden Mitteln oder nach Temperaturveränderung, wird das Rohprodukt, bevorzugt nach Zugabe von Säure bis zur Neutralisation der noch unverbrauchten Basen, zunächst vom Hauptteil der als Nebenprodukt gebildeten Salze bzw. der flüssigen Komponenten befreit und kann dann einem weiteren Reinigungs- und Trocknungsverfahren unterzogen werden (z. B. Dialyse, Ionenaustauscher-Entsalzung, Lyophilisierung).

Die nach dem erfindungsgemäßen Verfahren herstellbaren Ether des β-Cyclodextrins können auf den bekannten Anwendungsgebieten eingesetzt werden, also beispielsweise für die Herstellung von Einschlußverbindungen.

In den folgenden Beispielen verhalten sich Gew.-Teile zu Vol.-Teilen wie kg zu $dm^3$, die Prozentangaben sind auf das Gewicht bezogen. Der « DS » ist der Substitutionsgrad, d. h. die mittlere Anzahl von substituierten OH-Gruppen pro Anhydro-D-glucose-Einheit.

## Beispiel 1

1 Gew.-Teil β-CD (handelsüblich als 97 %iges Produkt) wird in 3 Vol.-Teilen Dimethoxyethan suspendiert und unter guter Durchmischung mit 2,13 Gew.-Teilen einer 45 %igen wäßrigen NaOH-Lösung versetzt. Das Gemisch wird in einem Rührautoklaven mit 2,25 Gew.-Teilen Ethylchlorid während 4 h auf 120 °C erhitzt. Nach dem Abkühlen und Neutralisieren von etwas Restalkali mit wäßriger Salzsäure werden die flüchtigen organischen Stoffe destillativ entfernt. Die verbleibende Lösung wird mit Wasser auf das doppelte Volumen verdünnt, filtriert und über eine Ionenaustauscherkombination (basisch-sauer) entsalzt. Die entsalzte Lösung wird lyophilisiert, wobei Ethyl-β-CD mit dem mittleren DS von 0,8 resultiert. Das Produkt ist 10 %ig rückstandsfrei wasserlöslich.

## Beispiel 2

1 Gew.-Teil β-CD wird in 2,5 Vol.-Teilen Aceton suspendiert und mit 2,6 Gew.-Teilen einer 50 %igen wäßrigen Lösung von N,N-Dimethylaminoethylchlorid-hydrochlorid vermischt. Nach Zusatz von 1,5 Gew.-Teilen einer 50 %igen wäßrigen NaOH-Lösung wird das Gemisch bei 50 °C während 3 h gerührt. Aceton wird abdestilliert und die verbleibende Lösung wird gegen Wasser zur Entfernung von Kochsalz und Nebenprodukten dialysiert. Die resultierende Lösung des basischen β-CD-Ethers wird mit Salzsäure auf einen pH-Wert von 4 gestellt und lyophilisiert. Es resultiert das Hydrochlorid von N,N-Dimethylaminoethyl-β-CD mit einem mittleren DS von 0,46.

**Patentansprüche**

1. Wasserlösliche Ether des β-Cyclodextrins, dadurch gekennzeichnet, daß sie als Ethersubstituenten die Ethyl- oder N,N-Dialkyl($C_1$ bis $C_4$)aminoethylgruppe aufweisen und aus Gemischen von Molekülen mit unterschiedlichem Substitutionsgrad bestehen, wobei der statistische Mittelwert des Substitutionsgrades 0,3 bis 0,8 beträgt.

2. Verfahren zur Herstellung der Ether nach Anspruch 1, dadurch gekennzeichnet, daß β-Cyclodextrin mit einem Veretherungsmittel in einem basischen flüssigen Reaktionsmedium umgesetzt wird, wobei das Reaktionsmedium ein Alkalimetallhydroxid, Wasser und mindestens ein mit Wasser mischbares organisches Lösemittel enthält.

3. Verfahren nach Anspruch 2, dadurch gekennzeichnet, daß mindestens ein organisches Lösemittel aus der Gruppe Dialk($C_1$ bis $C_3$)oxyethane, Alkanole von $C_2$ bis $C_5$, Alkoxy($C_1$ bis $C_4$)alkan($C_2$ oder $C_3$)ole und aliphatische Ketone eingesetzt wird.

4. Verfahren nach Anspruch 2 oder 3, dadurch gekennzeichnet, daß als Veretherungsmittel Ethylchlorid, Diethylsulfat oder ein 1-N,N-Dialkyl($C_1$ bis $C_4$)amino-2-chlorethan eingesetzt wird.

**Claims**

1. Water-soluble ethers of β-cyclodextrin which contain, as the ether substituent, the ethyl group or N,N-dialkyl($C_1$ to $C_4$)aminoethyl group and comprise mixtures of molecules having different degrees of substitution, the statistical mean value of the degree of substitution ranging from 0.3 to 0.8.

2. Process for the preparation of the ethers as claimed in Claim 1, wherein the β-cyclodextrin is reacted with an etherifying agent in a basic liquid reaction medium containing an alkali metal hydroxide, water and at least one water-miscible organic solvent.

3. The process as claimed in Claim 2, wherein at least one organic solvent selected from the group including dialk($C_1$ to $C_2$)oxyethanes, $C_2$ to $C_5$ alkanols, alkoxy ($C_1$ to $C_4$)alkan($C_2$ or $C_3$)ols and aliphatic ketones is employed.

4. The process as claimed in Claim 2 or 3, wherein the etherifying agent employed is ethyl chloride, diethyl sulfate or a 1-N,N-dialkyl($C_2$ to $C_4$)amino-2-chloroethane.

**Revendications**

1. Ethers solubles dans l'eau de la β-cyclodextrine, caractérisés en ce qu'ils comportent en tant que substituant éther le groupe éthyle ou un groupe N,N-dialkyl($C_1$-$C_4$)-aminoéthyle et consistent en mélanges de molécules à degré de substitution variable, la valeur moyenne statistique du degré de substitution allant de 0,3 à 0,8.

2. Procédé pour la préparation des éthers selon la revendication 1, caractérisé en ce que l'on fait réagir la β-cyclodextrine avec un agent d'éthérification dans un milieu réactionnel liquide basique, le milieu réactionnel contenant un hydroxyde de métal alcalin, de l'eau et au moins un solvant organique miscible à l'eau.

3. Procédé selon la revendication 2, caractérisé en ce que l'on utilise au moins un solvant organique choisi parmi des dialc($C_1$-$C_3$)oxyéthane, des alcanols en $C_2$-$C_5$, des alcoxy-($C_1$-$C_4$)alcanols($C_2$ ou $C_3$) et des cétones aliphatiques.

4. Procédé selon la revendication 2 ou 3, caractérisé en ce que, comme agent d'éthérification, on utilise le chlorure d'éthyle, le sulfate de diéthyle ou un 1-N,N-dialkyl($C_1$-$C_4$)-amino-2-chloréthane.